(19) Europäisches Patentamt
European Patent Office
Office européen des brevets

(11) EP 0 543 239 B1

(12) **EUROPÄISCHE PATENTSCHRIFT**

(45) Veröffentlichungstag und Bekanntmachung des Hinweises auf die Patenterteilung:
**12.02.1997 Patentblatt 1997/07**

(51) Int Cl.$^6$: **C08L 23/02**, C08L 25/08, C08L 33/12, C08L 35/00 // (C08L23/02, 25:08, 25:12)

(21) Anmeldenummer: **92119065.8**

(22) Anmeldetag: **06.11.1992**

(54) **Schlagzäh modifizierte thermoplastische Formmasse**

Impact modified thermoplastic moulding composition

Masse moulable thermoplastique modifiée pour une résistance élevée au choc

(84) Benannte Vertragsstaaten:
**BE DE FR GB NL**

(30) Priorität: **21.11.1991 DE 4138156**
**04.03.1992 DE 4206766**

(43) Veröffentlichungstag der Anmeldung:
**26.05.1993 Patentblatt 1993/21**

(73) Patentinhaber: **BASF Aktiengesellschaft**
**67063 Ludwigshafen (DE)**

(72) Erfinder:
- **Niessner, Norbert, Dr.**
**W-6701 Friedelsheim (DE)**
- **Muehlbach, Klaus, Dr.**
**W-6718 Gruenstadt (DE)**
- **Seitz, Friedrich, Dr.**
**W-6701 Friedelsheim (DE)**

(56) Entgegenhaltungen:
**DE-A- 3 421 981**

Bemerkungen:
Die Akte enthält technische Angaben, die nach dem Eingang der Anmeldung eingereicht wurden und die nicht in dieser Patentschrift enthalten sind.

EP 0 543 239 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Mischungen von Acrylat- oder Ethylen-Propylen-Dien-Kautschuken (EPDM) mit einer Hartkomponente (d.h. einer Komponente mit Glastemperatur oberhalb von > 20°C), z.B. einem Styrol-Acrylnitril-Copolymeren sind unter den Namen "ASA" oder "AES" bekannt. Dabei wird zur Verhinderung von Delaminationserscheinungen die Kautschukphase mit solchen Monomeren gepfropft, deren Polymer mit der Hartkomponente mischbar, d.h. "verträglich" ist. Solche Blends sind ausgesprochen gut witterungstabil und sind zäh bei Raumtemperatur. Beim ASA können im Emulsionspolymerisationsverfahren gezielt durch Einbau von Comonomeren bestimmte Eigenschaften verändert werden. Es sind z.B. Pfropfcopolymere aus einer kautschukartigen Pfropfgrundlage beschrieben, die gepfropft wurden mit einer Mischung aus Styrol/Acrylnitril, einer polymerisierbaren Stickstoffbase und einer eine polymerisierbare Doppelbindung enthaltende Säure (EP 164 048). Diese Formmassen zeichnen sich durch hohe Zähigkeit bei Raumtemperatur und gleichzeitig matter Oberfläche aus.

Die Zähigkeit, insbesondere von ASA, nimmt jedoch mit sinkender Temperatur rasch ab. AES hat den Nachteil, daß die Pfropfung des zugrundeliegenden EPDM-Kautschuks mit z.B. Styrol/Acrylnitril aufgrund der niedrigen Konzentration an ungesättigten C-C-Doppelbindungen im EPDM nur ungenügend ist und AES somit leicht zum Delaminieren bei Schlagbeanspruchung neigt. Erhöht man die Arizahl der Doppelbindungen im EPDM, z.B. durch Polymerisieren erhöhter Mengen an Dienen mit Ethylen/Propylen, so wird die anschließende Pfropfung zwar verbessert, der Anteil nach der Pfropfung nicht umgesetzter C-C-Doppelbindungen steigt jedoch auch und führt so zu einer verschlechterten Witterungsstabilität.

Das aufwendige Pfropfverfahren beim AES, die hohen Einsatzstoffkosten sowie das aufwendige Emulsionspolymerisationsverfahren für Alkylacrylate machen ASA- und AES-Blends erheblich teurer als andere, weniger witterungsstabile Blends, z.B. das ABS.

Es war daher die Aufgabe gestellt, kostengünstige Blends aus Thermoplasten mit schlagzäh modifizierenden Polymeren zu finden, die neben einer ausgezeichneten Witterungsstabilität und einer hohen Zähigkeit bei Raumtemperatur und in der Kälte preiswerter sind als die z. Zt. bekannten schlagzähmodifizierten witterungsstabilen Blends. Dazu bieten sich Abmischungen von modifizierten Polyolefinen mit modifizierten Thermoplasten an, wobei von dem Prinzip Gebrauch gemacht wird, eine reversible Wechselwirkung (Säure-Base-Wechselwirkung) zu einer Verknüpfung von modifiziertem Polyolefin und modifiziertem Thermoplasten zu benutzen. Hierzu zählen nicht die sogenannten Ionomeren, deren Wechselwirkung auf salzartigen, nicht reversiblen Ionenbindungen beruht.

In JA-A-68-0 006 108 ist eine verbesserte Polypropylen-(PP)-Faser beschrieben, erhalten durch Pfropfen von PP mit einerseits einem säuregruppenhaltigen Monomeren (z.B. (Meth)acrylsäure) und Mischen mit einem Polymeren mit einpolymerisiertem basischem Stickstoff. Dieses Verfahren ist geeignet, um Fasern mit verbesserter Anfärbbarkeit zu erhalten, jedoch nicht für die Herstellung schlagzäh modifizierter Polymerer.

DE-A-2 943 030 beschreibt einen Copolymerlatex aus Styrol/Acrylnitril/Vinylpyridin, eventuell mit säure- bzw. hydroxylgruppenhaltigen Monomeren und funktionellen Monomeren wie z.B. N-Methylolderivaten. Diese Mischungen sind geeignet für Beschichtungen und Lackierungen, die in der Wärme vernetzen und unlöslich bzw. unschmelzbar werden, jedoch nicht, um schlagzäh modifizierte Thermoplaste herzustellen.

US-A-3 236 914 beschreibt ein Verfahren zur Herstellung homogener Polymermischungen, das die Wechselwirkung von Stickstoffatomen in Polymer A und Säuregruppen in Polymer B ausnützt. Es gibt jedoch keinen Hinweis darauf, ob Styrol/Acrylnitril-Copolymere mit säuremodifizierten Olefin-Copolymeren und basenmodifizierten SAN-Copolymeren schlagzäh modifiziert werden können.

US-A-4 617 337 und 4 579 671 beschreiben die Komplexbildung aus einem zu mindestens 95 % neutralisiertem sulfonierten Polymer auf der Grundlage von Butyl-Kautschuk, EPDM-Terpolymeren oder Copolymeren aus Butadien oder Isopren mit Styrol, mit einem Copolymeren aus $C_4$-$C_{12}$-Alkylmethacrylaten (also Acrylkautschuk) oder Acrylaten mit Vinylpyridin. Diese Formmassen bilden zwar Elastomere, doch führt die thermoplastische Verarbeitung aufgrund der thermischen Instabilität der Vinylpyridin-Monomereinheit zu starken Verfärbungen der verarbeiteten Formmasse.

DE-A-3 421 981 - der bislang beste Vorschlag - beschreibt Mischungen aus eines Terpolymeren aus Ethylen, n-Butylacrylat und Acrylsäure und einer Copolymer-Matrix aus Styrol und Dimethylaminoethylacrylat (DMAEA), Dimethylaminoethylmethacrylat (DMAEMA) und/oder N-Vinylimidazol (NVI). Obwohl diese Mischungen als schlagzähmodifizierende Komponenten für Styrol/Acrylnitril-(SAN-)Copolymere beschrieben werden, ist aber die Verträglichkeit der beschriebenen Mischungen mit SAN so gering, daß es bei Schlagbeanspruchung auch in diesem Fall zu Delaminationserscheinungen kommt und eine sehr geringe Kerbschlagzähigkeit beobachtet wird.

Die eingangs gestellte Aufgabe wird gelöst durch die erfindungsgemäßen Formmassen, die enthalten - bezogen auf die Summe aus A, B, C und D -

A: 10 bis 90 Gew.-%, insbesondere 20 bis 80 Gew.-% eines oder mehrerer Copolymerer mit einer Glastemperatur oberhalb von 0°C aus

A1: 30 bis 95 Gew.-%, insbesondere 40 bis 80 Gew.-% Styrol oder eines substituierten Styrols, das etwa durch die allgemeine Formel

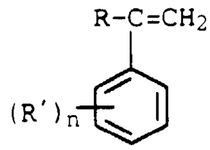

beschrieben werden kann,
wobei R einen Alkylrest mit 1 bis 8 C-Atomen oder ein Wasserstoffatom und R' einen Alkylrest mit 1 bis 8 C-Atomen darstellen und n den Wert 0, 1, 2 oder 3 hat oder Methylmethacrylat oder deren Mischungen und

A2: 4 bis 40 Gew.-%, insbesondere 10 bis 30 Gew.-% Acrylnitril, Methacrylnitril, Methylmethacrylat, Maleinsäureanhydrid oder deren Mischungen,

A3: 1 bis 30 Gew.-% eines Monomeren ausgewählt aus der Gruppe der Monomeren der allgemeinen Formeln I oder II oder der heterocyclischen stickstoffhaltigen Monomeren N-Vinylimidazol oder N-Vinylcarbazol,

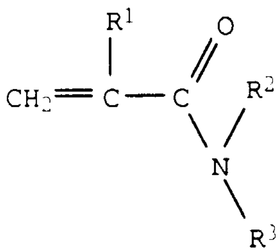 (I)

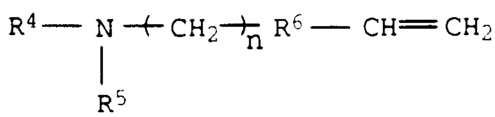 (II)

in der

$R^1$, $R^2$, $R^3$:
jeweils Wasserstoff, $CH_3$, $C_2H_5$, $C_3H_7$, $C_4H_9$, Phenyl, $CF_3$, Phenyl-$C_1$-$C_4$-Alkyl

$R^4$ und $R^5$:
jeweils Wasserstoff oder $C_1$-$C_8$-Alkyl, und

$R^6$:

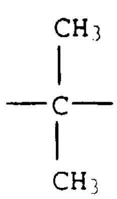 , 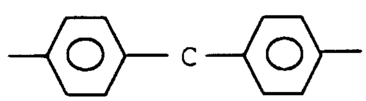 oder 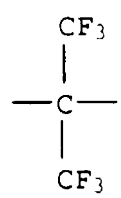

bedeuten, wobei
n die Werte 0 - 10 annehmen kann und

A4: bis zu 40 Gew.-% eines oder mehrerer copolymerisierbarer ethylenisch ungesättigter Monomerer;

B: 10 bis 90 Gew.-% eines oder mehrerer Copolymerer mit einer Glastemperatur unterhalb von 0°C aus

B1: 50 bis 99,9 Gew.-% eines oder mehrerer alpha-Olefine aus der Gruppe Ethylen, Propen, 1-Buten, iso-Buten, 1-Penten und 1-Hexen,

B2: 0,1 bis 50 Gew.-% eines oder mehrerer Säuregruppen enthaltender Monomerer und

B3: bis zu 40 Gew.-% eines oder mehrerer copolymerisierbarer ethylenisch ungesättigter Monomerer;

C: bis zu 80 Gew.-% eines oder mehrerer Copolymerisate mit einer Glastemperatur oberhalb von > 0°C aus

C1: 50 bis 95 Gew.-% Styrol oder substituierten Styrolen oder Methylmethacrylat oder deren Mischungen,

C2: 5 bis 50 Gew.-% (Meth)acrylnitril, Methylmethacrylat, Maleinsäureanhydrid oder deren Mischungen und

D: bis zu 80 Gew.-% mindestens eines Polycarbonats.

Copolymer A enthält einpolymerisierte Einheiten stickstoffhaltiger Monomerer

Das Mengenverhältnis von Hartkomponenten bildender Monomeren zu Stickstoffgruppen enthaltenden Monomeren (A1+A2): A3 ist bevorzugt 20:1 bis 2:1 und besonders bevorzugt 10:1 bis 5:1 (bezogen auf das Gewicht).

Andererseits liegt das Mengenverhältnis von Polymeren von alpha-Olefinen und säuregruppenhaltigen Monomeren (B1:B2) bevorzugt bei 99:1 bis 5:1, insbesondere 95:5 bis 10:1.

Bevorzugte Polymere A sind Copolymere von Styrol, alpha-Methylstyrol, p-Methylstyrol (A1); Methylmethacrylat, Maleinsäureanhydrid, (Meth)acrylnitril (A2) und N,N-Dimethylaminoethylacrylat, N,N-Dimethylaminoethylmethacrylat, 3-Methyl-3-aminopropen(1), N-Vinylcarbazol, N-Vinylimidazol (A3), wobei ein oder mehrere Monomeren A2 und mit einem oder mehreren Monomeren A3, gegebenenfalls mit weiteren copolymerisierbaren ethylenisch ungesättigten Monomeren polymerisiert werden können. Geeignet sind jedoch alle Copolymere, die eine Glastemperatur ($T_g$) oberhalb von 0°C besitzen und mit basischen Gruppen wie beschrieben versehen sind.

Bevorzugt liegt der Anteil der basenhaltigen Komponente A3 bei 1-30, besonders bevorzugt bei 2-20 Gew.-% bezogen auf A. Diese Copolymeren können mit allen üblichen Polymerisationsverfahren wie zum Beispiel der Masse-, Suspensions-, Lösungs-, Fällungs- oder Emulsionspolymerisation hergestellt werden.

Bevorzugte Polymere B sind säuremodifizierte Copolymere von Ethylen, Propylen, 1-Buten, Isobutylen, 1-Penten, 1-Hexen (B1) mit säuregruppenhaltigen ethylenisch ungesättigten Monomeren wie Acrylsäure, (Meth)acrylsäure, Vinylbenzoesäure, Vinylsulfonsäure (B2), wobei ein oder mehrere Monomere B1 copolymerisiert werden können mit einem oder mehreren Monomeren B2, gegebenenfalls mit weiteren ethylenisch ungesättigten Monomeren B3. Geeignet sind jedoch alle Copolymere, die eine Glastemperatur $T_g$ unterhalb von 0°C besitzen und mit säurehaltigen Gruppen versehen sind.

Der Anteil der säuregruppenhaltigen Monomeren B2, bezogen auf B liegt bei 0,1 bis 50, bevorzugt bei 1 bis 40 Gew.-%.

Auch die Herstellung von Copolymeren B ist allgemein bekannt. Verfahren zur Herstellung von Polyolefinen sind z.B. beschriebenin "Ullmanns Enzyklopädie der technischen Chemie", 4. Aufl., Band 19, S. 167-226.

Besonders bevorzugte Polymere B sind Copolymere des Ethylens mit Acrylsäure und/oder Methacrylsäure und/oder den Estern dieser Säuren, z.B. mit den Methyl-, Ethyl-, Propyl-, n-, i- bzw. t-Butyl- und 2-Ethylhexylestern. Zusätzlich können die Kautschuke noch Säuregruppen etwa in Form von Dicarbonsäuren, Derivate dieser Säuren, Vinylester und -ether enthalten. Eine weitere Möglichkeit und außerdem ist das Einpolymerisieren von Epoxygruppen enthaltenden Monomeren.

Der Ethylengehalt der Copolymeren liegt im allgemeinen im Bereich von über 50 bis 99,9 Gew.-%, der Anteil des Acrylsäure- und/oder Methacrylsäureesters jeweils im Bereich von 2 bis 50 Gew.-%.

Geeignet sind z.B. Copolymerisate aus

50 bis 99,9 Gew.-%, insbesondere 60 bis 95 Gew.-% Ethylen,

0,5 bis 40 Gew.-%, insbesondere 3 bis 20 Gew.-% Acrylsäure und/oder Maleinsäureanhydrid,

0 bis 40 Gew.-%, insbesondere 10 bis 35 Gew.-% n-Butylacrylat und/oder 2-Ethylhexylacrylat.

Die Herstellung der vorstehend beschriebenen Ethylencopolymeren geschieht auf bekannte Weise, vorzugsweise durch statistische Copolymerisation unter hohem Druck und erhöhter Temperatur. Entsprechende Verfahren sind beschrieben.

Der Schmelzindex der Ethylencopolymeren liegt im allgemeinen im Bereich von 1 bis 80 g/10 min (gemessen bei 190°C und 2,16 kg Belastung).

Copolymerisate wie Komponente A und Komponente B können aber auch durch polymeranaloge Umsetzung von nicht-säure- bzw. nicht-base-gruppenhaltigen Polymeren mit geeigneten Reagenzien hergestellt werden. Solche Reaktionen an Makromolekülen die es ermöglichen, bestimmte funktionelle Gruppen einzuführen, sind z.B. beschrieben in dem Lehrbuch von H.G. Elias "Makromoleküle", Bd. 1, 5. Auflage, Hüthig & Wepf 1990, S. 558 ff.

Gegebenenfalls enthalten die erfindungsgemäßen thermoplastischen Formmassen bis 80 Gew.-%, vorzugsweise bis 50 Gew.-% eines thermoplastischen Copolymerisats C aus 50 bis 95 Gew.-%, vorzugsweise 60 bis 80 Gew.-% Styrol oder substituierten Styrolen oder Methylmethacrylat oder deren Mischungen (C1) sowie 5 bis 50 Gew.-%, vorzugsweise 20 bis 40 Gew.-% Acrylnitril, Methacrylnitril, Methylmethacrylat, Maleinsäureanhydrid oder deren Mischungen (C2).

Die Copolymerisate C sind harzartig, thermoplastisch und kautschukfrei. Besonders bevorzugt sind Copolymere aus Styrol mit Acrylnitril und eventuell mit Methylmethacrylat, aus $\alpha$-Methylstyrol mit Acrylnitril und eventuell mit Methylmethacrylat oder aus Styrol und $\alpha$-Methylstyrol mit Acrylnitril und eventuell mit Methylmethacrylat und aus Styrol und Maleinsäureanhydrid. Es können auch mehrere Copolymere gleichzeitig eingesetzt werden.

Solche Copolymerisate C sind ansonsten bekannt und lassen sich durch radikalische Polymerisation, insbesondere durch Emulsions-, Suspensions-, Lösungs- und Massepolymerisation herstellen. Sie weisen Viskositätszahlen im Bereich von 40 bis 160 auf, dies entspricht mittleren Molekulargewichten $\overline{M}_w$ (Gewichtsmittelwert) von 40 000 bis 2 000 000.

Komponente D

Erfindungsgemäß geeignete, thermoplastische aromatische Polycarbonate D sind die auf der Grundlage der bekannten Bisphenole der Struktur

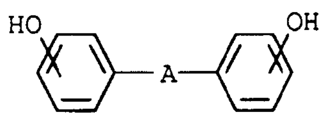

worin A eine Einfachbindung, $C_1$-$C_3$-Alkylen, $C_2$-$C_3$-Alkyliden, $C_3$-$C_6$-Cycloalkyliden, -S- oder -$SO_2$- bedeutet.

Erfindungsgemäß geeignet sind Homopolycarbonate und Copolycarbonate.

Die Herstellung der Polycarbonate ist ebenfalls bekannt und kann beispielsweise mit Phosgen nach dem Phasengrenzflächenverfahren oder nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-tert.-Butylphenol aber auch langkettige Alkylphenole wie 4-(1,3-Tetramethyl-butyl)-phenol, gemäß DE-OS 28 42 005 oder Mono- oder Dialkylphenole mit insgesamt 8 bis 20 C-Atomen in den Alkylsubstituenten gemäß DE-OS 35 06 472, wie beispielsweise p-Nonylphenol, 3,5-di-tert.-Butylphenol, p-tert.-Oc-tylphenol, p-Dodecylphenol, 2-(3,5-dimethyl-heptyl)-phenol und 4-(3,5-Dimethylheptyl)-phenol.

Erfindungsgemäß gut geeignete Polycarbonate weisen eine relative Viskosität $\eta_{rel}$ von 1,10 bis 1,50, insbesondere 1,25 bis 1,40 auf. Dies entspricht einem mittleren Molekulargewicht ($\overline{M}_w$) von 10 000 bis 200 000, vorzugsweise von 20 000 bis 80 000.

Geeignete Diphenole der Formel (I) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)cyclohexan.

Bevorzugte Diphenole der Formel (I) sind 2,2-Bis-(4-hydroxyphenyl)-propan und 1,1-Bis-(4-hydroxyphenyl)-cyclohexan.

Erfindungsgemäß geeignete Polycarbonate können in bekannter Weise verzweigt sein, und zwar vorzugsweise durch den Einbau von 0,05 bis 2,0 mol-%, bezogen auf die Summe der eingesetzten Diphenole, an Verbindungen mit drei oder mehr als drei phenolischen OH-Gruppen.

Bevorzugte Polycarbonate sind das Homopolymerisat von Bisphenol A und die Copolycarbonate von Bisphenol A.

Die Herstellung der erfindungsgemäßen thermoplastischen Formmassen erfolgt durch Mischen der Komponenten. Es kann vorteilhaft sein, einzelne Komponenten vorzumischen. Auch das Mischen der Komponenten in Lösung und Entfernen der Lösungsmittel ist möglich.

Geeignete organische Lösungsmittel für die Komponenten A bis D sind beispielsweise Chlorbenzol, Gemische aus Chlorbenzol und Methylenchlorid oder Gemische aus Chlorbenzol und aromatischen Kohlenwasserstoffen, z.B. Toluol.

Das Eindampfen der Lösungsmittelgemische kann beispielsweise in Eindampfextrudern erfolgen.

Als Mischaggregate für die Durchführung des erfindungsgemäßen Verfahrens sind beispielsweise übliche Taumelmischer oder Rührwerksmischer zu nennen.

Geeignete Aggregate für die Schmelzcompoundierung sind beispielsweise diskontinuierlich arbeitende, beheizte Innenkneter mit oder ohne Stempel, kontinuierlich arbeitende Innenkneter, Schneckenkneter mit axial oszillierenden Schnecken, Zweiwellenextruder sowie Mischwalzwerke mit beheizten Walzen.

Für die Schmelzextrusion sind beispielsweise Ein- und Zweiwellenextruder besonders geeignet.

Die erfindungsgemäßen thermoplastischen Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern.

Zur Untersuchung der Eigenschaften der Formmassen, die in den nachstehenden Beispielen beschrieben sind, wurden die folgenden Meßverfahren angewendet:

- Die mittlere Teilchengröße und die Teilchengrößenverteilung wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser,der auch als $d_{50}$-Wert der integralen Massenverteilung bezeichnet wird, ist dabei als der Teilchendurchmesser definiert, bei dem 50 Gew.-% der Teilchen einen kleineren Durchmesser und 5 Gew.-% einen größeren Durchmesser haben als der $d_{50}$-Wert.

- Der Schmelzindex MFI in [g/10 min] wurde nach DIN 53735 bei einer Temperatur von 190°C und einer Belastung von 2,16 kg bestimmt.

- Die Viskositätszahlen in [$cm^3$/g] wurden bei 23°C an einer 0,5 %igen Lösung in Methylethylketon bestimmt. Gelanteile wurden vor der Messung durch Zentrifugieren entfernt und die Einwaage entsprechend korrigiert.

Komponente A

Als Komponente A-1 und A-2 wurde je ein Emulsionspolymerisat aus Styrol, Acrylnitril und N,N-Dimethylaminoethylacrylat (DMAEA) hergestellt.

Als Komponente A-3 bis A-6 wurden Emulsionspolymerisate aus Styrol, Acrylnitril und N-Vinylimidazol (NVI) hergestellt (jeweils mit wechselnden Mengen). Die Herstellung der Komponente A-1 bis A-6 erfolgte nach folgender Vorschrift:

In 150 g entionisiertem Wasser wurden 1 g eines Natriumsalzes einer $C_{12}$- bis $C_{18}$-Paraffinsulfonsäure, 0,3 g Kaliumperoxodisulfat, 0,3 g $NaHCO_3$ und 0,15 g Natriumpyrosulfat vorgelegt und auf T = 75°C erwärmt. Innerhalb von 3 Stunden wurden die in Tabelle 1 angegebenen Monomermischungen zugetropft und anschließend 1 Stunde nachgerührt. Der erhaltene Latex hatte einen Feststoffgehalt von 40 % und eine mittlere Teilchengröße $d_{50}$ = 85 nm. Die Teilchengrößenverteilung war eng. Die Zusammensetzung der übrigen Copolymerisate A ergibt sich aus der nachstehenden Tabelle.

Tabelle:

| Copolymerisate mit stickstoffhaltigen Monomeren | | | | |
|---|---|---|---|---|
| Komponente A | Styrol (g) | Acrylnitril (g) | NVI (g) | DMAEA (g) |
| A-1 | 74 | 25 | 1 | - |
| A-2 | 73,5 | 24,5 | 2 | - |
| A-3 | 74 | 25 | | 1 |
| A-4 | 73,5 | 24,5 | - | 2 |
| A-5 | 71,25 | 23,75 | - | 5 |
| A-6 | 67,5 | 22,5 | - | 10 |

Komponente B

Als Komponente B wurde ein Copolymer aus 88 Gew.-% Ethylen, 8 Gew.-% n-Butylacrylat und 4 % Acrylsäure mit einer Dichte bei 23°C von 0,925 g/$cm^3$ und einem Schmelzindex MFI (190/2.16) von 6 g/min eingesetzt.

Komponente C

Als Komponente C wurde ein Copolymer aus Styrol und Acrylnitril im Gew.-Verhältnis 65:35 und einer Viskositätszahl von 81 ml/g (23°C in Dimethylformamid) eingesetzt, hergestellt durch kontinuierliche Lösungspolymerisation nach einem Verfahren, wie es beispielsweise im Kunststoff-Handbuch, Vieweg-Daumiller, Band V (Polystyrol), Carl-Hanser-Verlag, München 1969, S. 124, Z. 12 ff. beschrieben ist.

Herstellung der thermoplastischen Formmassen

Die Komponenten wurden in trockener Form auf einem Fluidmischer gemischt und bei 260°C auf einem Doppelschneckenextruder (ZSK 30 der Fa. Werner & Pfleiderer) extrudiert. Hieraus wurden die erforderlichen Testkörper durch Spritzguß bei 250°C hergestellt.

## Patentansprüche

**1.** Thermoplastische Formmasse aus - bezogen auf die Summe aus A, B, C und D -

A: 10 bis 90 Gew.-% eines oder mehrerer Copolymerer mit einer Glastemperatur oberhalb von 0°C aus

A1: 30 bis 95 Gew.-% Styrol oder eines substituierten Styrols oder Methylmethacrylat

A2: 4 bis 40 Gew.-% Acrylnitril, Methacrylnitril, Methylmethacrylat, Maleinsäureanhydrid oder deren Mischungen,

A3: 1 bis 30 Gew.-% eines Monomeren ausgewählt aus der Gruppe der Monomeren der allgemeinen Formeln I oder II oder der heterocyclischen stickstoffhaltigen Monomeren N-Vinylimidazol oder N-Vinylcarbazol,

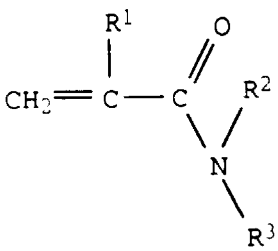
(I)

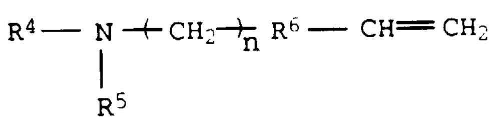
(II)

in der

$R^1$, $R^2$, $R^3$:
jeweils Wasserstoff, $CH_3$, $C_2H_5$, $C_3H_7$, $C_4H_9$, Phenyl, $CF_3$, Phenyl-$C_1$-$C_4$-Alkyl

$R^4$ und $R^5$:
jeweils Wasserstoff oder $C_1$-$C_8$-Alkyl, und

$R^6$:

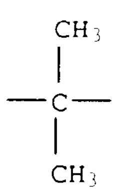 , 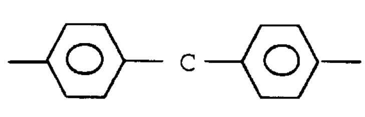 oder 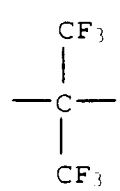

bedeuten, wobei
n die Werte 0 - 10 annehmen kann und

A4: bis zu 40 Gew.-% eines oder mehrerer copolymerisierbarer ethylenisch ungesättigter Monomerer;

B: 10 bis 90 Gew.-% eines oder mehrerer Copolymerer mit einer Glastemperatur unterhalb von 0°C aus

B1: 50 bis 99,9 Gew.-% eines oder mehrerer alpha-Olefine aus der Gruppe Ethylen, Propen, 1-Buten, iso-Buten, 1-Penten und 1-Hexen,

B2: 0,1 bis 50 Gew.-% eines oder mehrerer Säuregruppen enthaltender Monomerer und

B3: bis zu 40 Gew.-% eines oder mehrerer copolymerisierbarer ethylenisch ungesättigter Monomerer;

C: bis zu 80 Gew.-% eines oder mehrerer Copolymerisate mit einer Glastemperatur oberhalb von > 0°C aus

C1: 50 bis 95 Gew.-% Styrol oder substituierten Styrolen oder Methylmethacrylat oder deren Mischungen,

C2: 5 bis 50 Gew.-% (Meth)acrylnitril, Methylmethacrylat, Maleinsäureanhydrid oder deren Mischungen und

D: bis zu 80 Gew.-% mindestens eines Polycarbonats.

## Claims

**1.** A thermoplastic molding material comprising, based on the sum of A, B, C and D,

A: from 10 to 90% by weight of one or more copolymers having a glass transition temperature above 0°C and consisting of
A1: from 30 to 95% by weight of styrene or of a substituted styrene or methyl methacrylate,
A2: from 4 to 40% by weight of acrylonitrile, methacrylonitrile, methyl methacrylate, maleic anhydride or a mixture thereof,
A3: from 1 to 30% by weight of a monomer selected from the group consisting of the monomers of the formula I or II or of the heterocylic nitrogen-containing monomers N-vinylimidazole and N-vinylcarbazole

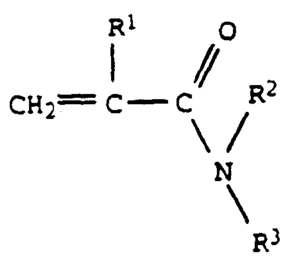 (I) 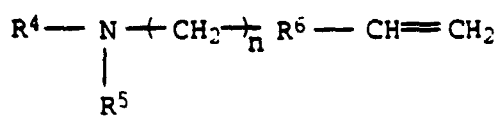 (II)

where $R^1$, $R^2$ and $R^3$ are each hydrogen, $CH_3$, $C_2H_5$, $C_3H_7$, $C_4H_9$, phenyl, $CF_3$ or phenyl-$C_1$-$C_4$-alkyl, $R^4$ and $R^5$ are each hydrogen or $C_1$-$C_8$-alkyl, $R^6$ is

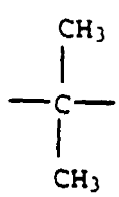 , 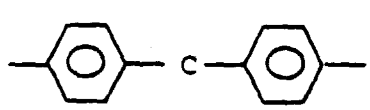 or 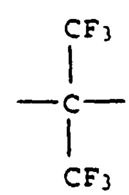

and n may be 0-10, and
A4: up to 40% by weight of one or more copolymerizable ethylenically unsaturated monomers,
B: from 10 to 90% by weight of one or more copolymers having a glass transition temperature below 0°C and consisting of
B1: from 50 to 99.9% by weight of one or more alphaolefins selected from the group consisting of ethylene,

propene, 1-butene, isobutene, 1-pentene and 1-hexene,

B2: from 0.1 to 50% by weight of one or more monomers containing acid groups and

B3: up to 40% by weight of one or more copolymerizable ethylenically unsaturated monomers,

C: up to 80% by weight of one or more copolymers having a glass transition temperature above 0°C and consisting of

C1: from 50 to 95% by weight of styrene or substituted styrenes or methyl methacrylate or a mixture thereof and

C2: from 5 to 50% by weight of (meth)acrylonitrile, methyl methacrylate, maleic anhydride or a mixture thereof and

D: up to 80% by weight of at least one polycarbonate.

**Revendications**

**1.** Masse moulable thermoplastique constituée de - par rapport à la somme de A, de B, de C et de D -

A: 10 à 90 % en poids d'un ou de plusieurs copolymères avec une température de transition vitreuse supérieure à 0 °C, constitués de

A1: 30 à 95 % en poids de styrène ou d'un styrène substitué ou de méthacrylate de méthyle

A2: 4 à 40 % en poids d'acrylonitrile, de méthacrylonitrile, de méthacrylate de méthyle, d'anhydride maléique ou de leurs mélanges,

A3: 1 à 30 % en poids d'un monomère choisi parmi le groupe des monomères répondant aux formules générales I et II ou des monomères hétérocycliques contenant de l'azote, N-vinylimidazole ou N-vinylcarbazole,

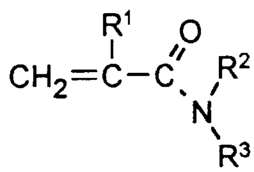 (I) 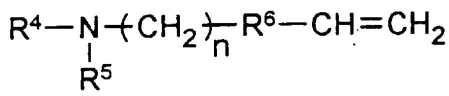 (II)

dans lesquelles

$R^1$, $R^2$, $R^3$ signifient respectivement un atome d'hydrogène, $CH_3$, $C_2H_5$, $C_3H_7$, $C_4H_9$, un groupe phényle, $CF_3$, un groupe phényl(alkyle en $C_1$-$C_4$)

$R^4$ et $R^5$ signifient respectivement un atome d'hydrogène ou un groupe alkyle en $C_1$-$C_8$, et

$R^6$ signifie

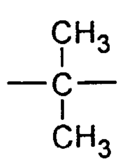, 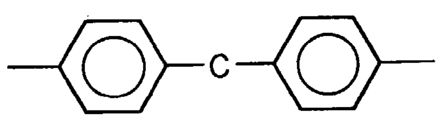 ou 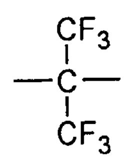,

où

n peut prendre des valeurs de 0 à 10 et

A4: jusqu'à 40 % en poids d'un ou de plusieurs monomères copolymérisables et éthyléniquement insaturés;

B: 10 à 90 % en poids d'un ou de plusieurs copolymères avec une température de transition vitreuse inférieure à 0 °C, constitués de

B1: 50 à 99,9 % en poids d'une ou de plusieurs alpha-oléfines choisies parmi le groupe formé de l'éthylène, du propène, du 1-butène, de l'isobutène, du 1-pentène et du 1-hexène,

B2: 0,1 à 50 % en poids d'un ou de plusieurs monomères contenant des groupes acides et

B3: jusqu'à 40 % en poids d'un ou de plusieurs monomères copolymérisables et éthyléniquement insaturés;

C: jusqu'à 80 % en poids d'un ou de plusieurs copolymères avec une température de transition vitreuse supérieure à 0 °C, constitués de

C1: 50 à 95 % en poids de styrène ou de styrènes substitués ou de méthacrylate de méthyle, ou de leurs mélanges,

C2: 5 à 50 % en poids de (méth)acrylonitrile, de méthacrylate de méthyle, d'anhydride maléique ou de leurs mélanges, et

D : jusqu'à 80 % en poids d'au moins un polycarbonate.